# EUROPÄISCHE PATENTSCHRIFT

(11) **EP 3 977 231 B1**
(45) Veröffentlichungstag und Bekanntmachung des Hinweises auf die Patenterteilung: **27.09.2023**
(21) Anmeldenummer: 20722258.9
(22) Anmeldetag: 22.04.2020
(51) Int. Cl.: G06F 1/16, F16M 11/04

(54) **AUSRICHTHILFE FÜR BILDSCHIRME**
ALIGNMENT AID FOR SCREENS
AIDE À L'AJUSTEMENT POUR ÉCRANS

(30) Priorität: 24.05.2019 DE 102019113924
(43) Veröffentlichungstag der Anmeldung: 06.04.2022
(73) Patentinhaber: Bohnen IT GmbH, 42349 Wuppertal (DE)
(72) Erfinder: BOHNEN, Jonas, 42349 Wuppertal (DE)
(74) Vertreter: Cohausz & Florack
(86) Internationale Anmeldenummer: PCT/EP2020/061215
(87) Internationale Veröffentlichungsnummer: WO 2020/239331

(56) Entgegenhaltungen:
- US-A1- 2009 091 881
- US-A1- 2019 004 764

## Beschreibung

Die Erfindung betrifft eine Ausrichthilfe für Bildschirme.

Am Arbeitsplatz werden heute häufig zwei oder mehr Bildschirme verwendet. So können mehrere Programme oder Dokumente gleichzeitig bearbeitet werden. Insbesondere in der Programmierung, für das technische Zeichnen oder der Bearbeitung von Datenbanken ist dies besonders hilfreich.

Die Ausrichtung der einzelnen Bildschirme in ihrer Höhe, ihrer Neigung und in ihrem Abstand zum Benutzer erfolgt im Wesentlichen über den Bildschirmfuß oder den am Bildschirm befestigten Gelenkarm.

Die Ausrichtung der Bildschirme untereinander erweist sich jedoch häufig als problematisch. Eine exakte parallele Ausrichtung der Bildschirmkanten zueinander ist mit den im Stand der Technik bekannten Mitteln schwierig. Die Ausrichtung ist zudem häufig nicht von Dauer, wenn sich bei Reinigung des Bildschirms oder einem Stoß gegen den Schreibtisch oder gegen den Bildschirm etwas verschiebt. Neben der rein ästhetischen Nachteiligkeit für den Benutzer kann die unzureichende Stabilität der Ausrichtung auch ergonomisch nachteilig sein. Sie führt zu Spalten zwischen den Bildschirmkanten, durch die störendes Licht eindringt und den Benutzer blendet. Lichtreflexe auf den Bildschirmen führen in der Folge zu einer fehlerhaften Datenbearbeitung und/oder zu gesundheitlichen Beeinträchtigungen.

Zwar ist aus dem Stand der Technik bereits bekannt, mehrere Bildschirme an einem sogenannten Monitorarm zu befestigen, jedoch bedürfen diese einer dauerhaften und daher einer festen Verbindung mit der Wand oder dem Schreibtisch, sie müssen fest (z.B. über Schraubverbindungen) mit den Bildschirmen verbunden werden und nehmen außerdem wertvollen Raum in Anspruch. Ein Ausrichten verschiedener, auf einem gemeinsamen Monitorarm montierten Bildschirme zueinander ist ebenfalls nicht einfach.

US 2009/0091881 A1 offenbart eine Anzeigevorrichtung, die es einem Benutzer ermöglicht, eine zusätzliche Einheit, wie z.B. eine zusätzliche Anzeigetafel oder einen Memo-Clip, einfach an der Anzeigevorrichtung zu befestigen oder davon zu trennen. Die Anzeigevorrichtung umfasst eine Anzeigetafel, eine Trägereinheit zum Tragen der Anzeigetafel und mindestens eine Verbindungsnut, die an einem Rand der Anzeigetafel ausgebildet ist, damit mindestens eine Zusatzeinheit an der Anzeigetafel angebracht oder von ihr getrennt werden kann.

Um die oben genannten Nachteile zu überwinden, ist es daher Aufgabe der Erfindung, ein Hilfsmittel zu schaffen, welches die Ausrichtung zweier oder mehrerer Bildschirme zueinander auf einfache Art und Weise am Arbeitsplatz ermöglicht, so dass ein Berühren oder eine versehentliche Erschütterung die Ausrichtung der Bildschirme nicht verändert.

Gelöst wird die Aufgabe durch die in Anspruch 1 dargelegte Ausrichthilfe für Bildschirme mit den Merkmalen des Anspruches 1.

Von besonderem Vorteil ist die erfindungsgemäße Ausrichthilfe bei feststehenden Bildschirmen am Arbeitsplatz oder auch jeglichen anderen feststehenden Monitoren, wie beispielsweise Fernsehmonitoren. Insbesondere Bildschirme mit randlosen Anzeigeflächen lassen sich auf einfache Art und Weise spaltfrei nebeneinander oder übereinander anordnen. Durch das Zusammenwirken der ersten und zweiten Verbindungsmittel untereinander liegen die Außenkanten der Bildschirme sicher aneinander an, auch wenn die Bildschirme oder ihre Abstellfläche erschüttert werden. Auf einfache Art und Weise lassen sich über die erfindungsgemäße Ausrichthilfe weitere Bildschirme an den bereits vorhandenen anordnen.

Durch die nahezu übergangslose Anordnung der Bildschirme untereinander wird neben der Arbeitsästhetik vor allem die Arbeitsergonomie deutlich verbessert. Die erfindungsgemäße Ausrichthilfe erlaubt, die vertikalen oder horizontalen Außenkanten der Bildschirme so exakt zueinander zu positionieren, dass das Auge muss kein "Hindernis" in Form eines Spaltes zwischen den Bildschirmen überwinden; es wird zudem nicht durch wechselnde Lichtverhältnisse beeinträchtigt.

Vorzugsweise ist die erfindungsgemäße Ausrichthilfe so gestaltet, dass die Verbindungsmittel kontaktlos miteinander kooperieren. Dies bedeutet, dass die Verbindungsmittel auch innerhalb des Bildschirmgehäuses untergebracht sein können und nicht nach außen auftragen. Die Bildschirme können so nahtlos aneinander anliegen.

Gemäß einer Ausführungsform der Erfindung ist das erste Verbindungsmittel ein erster Magnet und das zweite Verbindungsmittel ein mit dem Magnet zusammenwirkendes magnetisches Material, wie zum Beispiel ein magnetisches Metall. Eine magnetische Verbindung der Außenkanten zweier Bildschirme über die erfindungsgemäße Ausrichthilfe ist von besonderem Vorteil, da diese ausreichend stabil und somit robust genug ist, um einer Erschütterung oder versehentlichen Verschiebung der Bildschirme entgegenzuwirken, sie jedoch auf einfache Art und Weise ohne Hilfsmittel wieder gelöst werden kann.

Erfindungsgemäß ist es ebenso möglich, dass das erste Verbindungmittel ein erster Magnet ist und auch das zweite Verbindungsmittel ein Magnet ist und, dass die Magnete am jeweiligen Bildschirm so angeordnet sind, dass die Magneten mit ungleicher Polung einander zugewandt sind. Auf diese Art und Weise können die Bildschirme untereinander nur in einer vorbestimmten Ausrichtung und Reihenfolge angeordnet werden. Eine verkehrte Anordnung oder Verdrehung der Bildschirme wird so vermieden. Die Ausrichthilfe ist damit besonders einfach und fehlerfrei zu benutzen.

Erfindungsgemäß kann auch vorgesehen sein, dass die Verbindungsmittel als mechanische Verbindungsmittel ausgebildet sind.

So ist es gemäß einer Ausführungsform der Erfindung denkbar, dass das erste Verbindungsmittel ein Fortsatz ist und das zweite Verbindungsmittel eine Ausnehmung ist, in welche der Fortsatz zur ausrichtenden Kopplung der Bildschirme eingreift. Auch bei dieser erfindungsgemäßen Ausführungsform ist gewährleistet, dass die Bildschirme untereinander nur in einer bestimmten Orientierung zueinander verbindbar sind. Fortsatz und Ausnehmung sind dabei so angeordnet, dass sie bei korrektem Ineinandergreifen die Bildschirme vertikal oder horizontal exakt zueinander ausrichten.

Fortsatz und Ausnehmung sind dabei derart komplementär gestaltet, dass sie ineinander eingreifen, sich jedoch bei leichten Erschütterungen oder Stößen gegen die Bildschirme nicht lösen.

Erfindungsgemäß kann das erste und das zweite Verbindungsmittel Rastmittel aufweisen, welche die Verbindungmittel aneinander fixieren. Es kann sich beispielsweise um aus Kunststoff gefertigte Clipselemente handeln, die so angeordnet sind, dass sie bei korrekter Orientierung der Bildschirme zueinander unter sanftem Druck positionsgenau verrasten. Erfindungsgemäß sind auch diese Rastmittel so ausgestaltet, dass ein Schwenken der Bildschirme um die Längsachse der Ausrichthilfe herum in gewissem Maße möglich ist.

Gemäß einer weiteren Ausführungsform der Erfindung sind die Verbindungsmittel als ergänzende Bauteile an den jeweiligen Bildschirm anordenbar. Erfindungsgemäß ist es denkbar, dass die Ausrichthilfe in Form eines Schienen- oder Leistenpaares ausgebildet ist. Bildschirme sind so nachträglich mit der erfindungsgemäßen Ausrichthilfe versehbar. Dies ermöglicht auch eine schnelle und einfache Neuanordnung der Bildschirme. Es ergeben sich erfindungsgemäß mehrere Möglichkeiten, die als separates Bauteil ausgebildete Ausrichthilfe mit Verbindungsmitteln auszustatten.

Dabei ist es denkbar, dass die Verbindungsmittel reib- und/oder formschlüssig am jeweiligen Bildschirm anordenbar sind. Das beispielsweise als Schiene oder Leiste ausgebildete Verbindungsmittel kann so auf die zu verbindende Außenkante des Bildschirms aufgeschoben, aufgeclipst, oder im Zweifelsfall auch aufgeschraubt oder - geklebt werden.

Erfindungsgemäß ist vorgesehen, dass ein Bildschirm mit einer erfindungsgemäßen Ausrichthilfe wenigstens ein erstes und wenigstens ein zweites Verbindungsmittel trägt, die für ein Zusammenwirken mit Verbindungsmitteln eines zweiten Bildschirmes gleicher Art vorgesehen sind.

So können die Verbindungsmittel in den Bildschirm, insbesondere in den Rahmen des Bildschirms integriert sein. Gerade bei kontaktlos wirkenden Verbindungsmitteln, wie den oben genannten Magneten, kann es von Vorteil sein, diese unmittelbar in den Bildschirm bzw. den Rahmen des Bildschirms zu integrieren.

So umfasst ein Bildschirm mit der erfindungsgemäßen Ausrichthilfe beispielsweise ein erstes Verbindungsmittel erster Ausprägung, welches in den linken Bildschirmrand integriert ist und ein zweites Verbindungsmittel zweiter Ausprägung, welches in den rechten Bildschirmrand integriert ist. Ein derartig ausgestatteter Bildschirm lässt sich mit einem weiteren Bildschirm mit derselben Ausstattung verbinden. Beide Bildschirme können mit der vorhandenen Ausrichthilfe zueinander ausgerichtet werden. Eine derartige Anordnung ist besonders aus ästhetischen Gründen von Vorteil, jedoch auch aus technischen Gesichtspunkten, da die Anzeigeflächen der Bildschirme insbesondere bei randlosen Ausführungsformen in der Tat nahtlos und ohne weiteres Auftragen der Ausrichthilfe aneinander anliegen.

Gegebenenfalls sind die Magnete zum Anzeigebereich des Bildschirms hin abgeschirmt und wirken nur in Richtung der Außenkante des Bildschirms.

Erfindungsgemäß ist es bei der magnetischen Ausführungsform der erfindungsgemäßen Ausrichthilfe denkbar, dass jeweils das erste Verbindungsmittel und das zweite Verbindungsmittel stabförmig ausgebildet ist und parallel zu einer Bildschirmkante in den Bildschirmrand integriert ist. Ebenso ist es erfindungsgemäß vorgesehen mehrere stabförmige Magnete entlang einer Linie ausgerichtet im Bildschirmrand zu integrieren. Die Form der Magnete ist jedoch erfindungsgemäß keineswegs auf stabförmige Magnete beschränkt. Erfindungsgemäß kann es sinnvoll sein, auch eine andere Form von Magneten zu verbauen.

Gemäß einer weiteren Ausführungsform der Erfindung ist das erste und das zweite Verbindungsmittel derart angeordnet, dass bei einer vertikalen oder horizontalen Aneinanderreihung mehrerer Bildschirme komplementäre Verbindungsmittel unterschiedlicher Bildschirme einander zugewandt sind. Eine fehlerhafte Anordnung der Bildschirme kann erfindungsgemäß demnach vermieden werden, wenn beispielsweise das erste Verbindungsmittel erster Ausprägung immer am rechten Rand eines Bildschirmes angeordnet ist, und die Ausprägung derart ist, dass die Nordpolung des Magnets zum Außenrand des Bildschirmes weist und das zweite Verbindungsmittel zweiter Ausprägung immer am linken Rand eines Bildschirmes angeordnet ist, und die Ausprägung derart ist, dass die Südpolung des Magnets zum Außenrand des Bildschirmes weist.

Ein besseres Verständnis der Erfindung sowie weitere Vorteile ergeben sich aus der nachfolgenden Beschreibung einiger Ausführungsbeispiele.

Es zeigen in vereinfachter Darstellung:
Figur 1 eine erste Ausführungsform der erfindungsgemäßen Ausrichthilfe;
Figur 2 eine Bildschirmanordnung mit der in Figur 1 gezeigten Ausrichthilfe, wobei die Ausrichthilfe in Form von separaten Klemmbauteilen an den Bildschirmen angeordnet ist;
Figur 3 eine Bildschirmanordnung mit einer weiteren Ausführungsform der Erfindung, wobei die Ausrichthilfen hierbei in das Bildschirmgehäuse integriert sind;
Figur 4 eine Bildschirmanordnung mit einer weiteren Ausführungsform der Erfindung, wobei die Ausrichthilfen in das Bildschirmgehäuse integriert sind;
Figur 5 eine Aufsicht auf eine Bildschirmanordnung, wie sie in den Figuren 3 oder 4 dargestellt ist;
Figur 6 eine ausschnittsweise Darstellung einer Anordnung von mehreren Bildschirmen, die sowohl vertikal als auch horizontal zueinander über die erfindungsgemäße Ausrichthilfe ausgerichtet sind; sowie
Figur 7 eine Bildschirmanordnung zweier Bildschirme mit einer weiteren Ausführungsform der Erfindung, wobei diese als mechanische Verbindungsmittel ausgebildet sind.

In den Figuren ist eine Anordnung von mehreren Bildschirmen insgesamt mit der Bezugsziffer 10 versehen. Die jeweiligen Anordnungen 10 werden mittels verschiedener Ausführungsformen der erfindungsgemäßen Ausrichthilfe in definierter Lage zueinander gehalten.

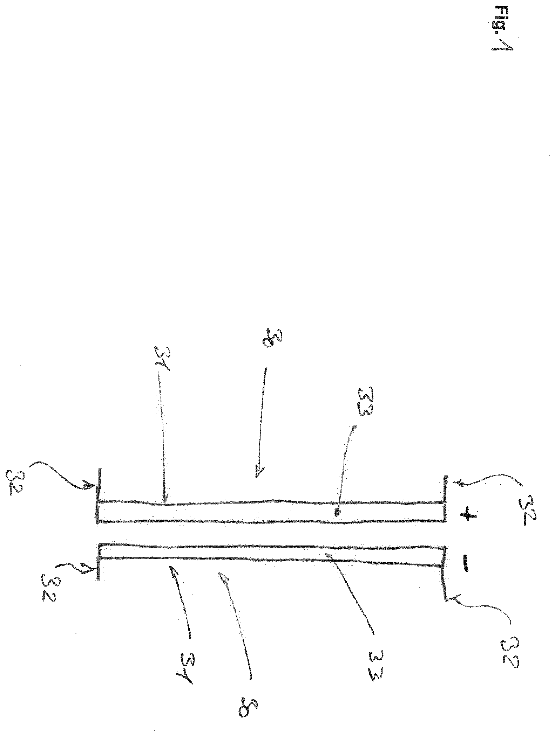

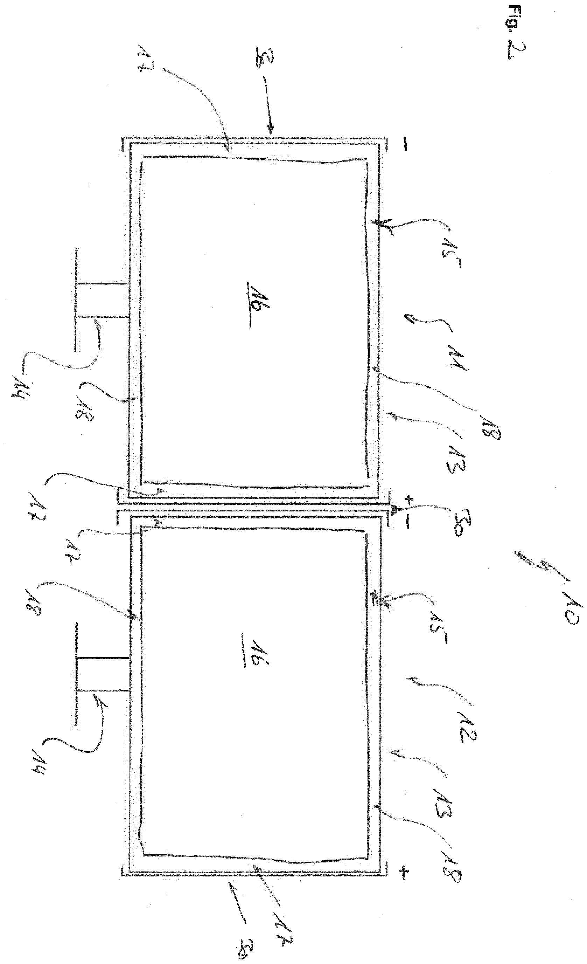

Eine erste Ausführungsform der Erfindung ist in den Figuren 1 und 2 gezeigt. Figur 2 zeigt eine Bildschirmanordnung 10 mit einem ersten Bildschirm 11 und einem zweiten Bildschirm 12. Jeder Bildschirm besteht zunächst aus einem Bildschirmgehäuse 13, welches von einem Bildschirmfuß 14 gehalten ist. In Figur 2 mag es sich um Arbeitsplatzbildschirme für Computer oder um Fernsehbildschirme handeln.

Jedes Bildschirmgehäuse 13 bildet einen Bildschirmrahmen 15 aus, welcher eine Anzeigefläche 16 zur Darstellung von Informationen umgibt. Dieser Bildschirmrahmen 15 ist zur Verdeutlichung der Erfindung überzeichnet. Dies ist insbesondere im Hinblick auf sogenannte rahmenlose Bildschirme klarzustellen. Bei diesen wird der Bildschirmrahmen 15 auf ein beinah nicht mehr wahrnehmendes Maß reduziert. Darüber hinaus gibt es mittlerweile Techniken, bei welchen der die Anzeigefläche einfassende Rahmen sichtseitig von der Anzeigeeinheit verdeckt ist. Nichtsdestotrotz ist auch bei Bildschirmen 11, 12 letzterer Bauart ein Rahmen im weitesten Sinne vorhanden, welcher die die Anzeigefläche bereitstellende Anzeigeeinheit im Gehäuse hält.

Jeder Bildschirmrahmen 15 verfügt über insgesamt vier Rahmenschenkel, nämlich jeweils zwei vertikale Rahmenschenkel 17 sowie zwei horizontale Rahmenschenkel 18.

Wie Figur 2 zu entnehmen ist, tragen bei der dort dargestellten Bildschirmanordnung 10 die jeweiligen vertikalen Rahmenschenkel 17 jeweils ein insgesamt mit der Bezugsziffer 30 bezeichnetes Klemmbauteil. Diese Klemmbauteile 30 sind Bestandteil der erfindungsgemäßen Ausrichthilfe. Zwei miteinander kooperierende Klemmbauteile 30 sind in Figur 1 darstellt.

Jedes Klemmbauteil 30 umfasst zunächst ein Klemmgehäuse 31. Jedes Klemmgehäuse verfügt an seinen Enden über in etwa horizontal gerichtete Klemmschenkel 32, mit welchen das Klemmbauteil 30 - wie in Figur 2 dargestellt - am Bildschirmrahmen festgelegt werden kann.

Im Übrigen nimmt das Klemmgehäuse 31 Verbindungsmittel auf, hier in Form von im weitesten Sinne stabförmigen Magneten 33. Damit die Magneten 33 zur Ausrichtung der Bildschirme 16 Figur 2 miteinander kooperieren, das heißt sich gegenseitig anziehen, sind sie hinsichtlich ihrer Polung zueinander komplementär ausgerichtet. Dies ist mittels der Symbole "+" beziehungsweise "-" in Figur 1 und 2 symbolisiert. Ein Magnet 33, eines der Klemmbauteile 30 stellt somit das erste Verbindungsmittel erste Ausprägung dar. Der andere Magnet 33 des korrespondieren Klemmbauteils 30 stellt somit das zweite Verbindungsmittel zweiter Ausprägung dar. Zwei zum Zusammenwirken miteinander grundsätzlich geeignete Verbindungsmittel bilden die erfindungsgemäße Ausrichthilfe.

Wie Figur 2 zeigt, trägt bei der dortigen Bildschirmanordnung 10 jeder Bildschirm zwei Klemmbauteile mit je einem Magneten, wobei die Polung der Magneten komplementär ausgebildet ist, also jeder Bildschirm ein hier mit "+" gekennzeichneten und einen mit "-" gekennzeichneten Magneten trägt. Somit trägt jeder Bildschirm 11/12 je ein erstes Verbindungsmittel der Ausrichthilfe sowie ein zweites Verbindungsmittel der Ausrichthilfe.

Wenn der erste Bildschirm 11 und zweite Bildschirm 12, wie in Figur 10 dargestellt, zu einer Anordnung zusammengebracht werden sollen, werden diese miteinander zusammenwirkenden Ausrichthilfen nebeneinandergestellt. Die in Figur 2 durch die Magneten hervorgerufenen Anziehungskräfte sorgen dafür, dass die jeweiligen Klemmbauteile und die mit ihnen verbundenen Rahmenabschnitte aneinander anliegen. So entsteht eine Verbindung zwischen beiden Bildschirmen. Wird nun auf einem der Bildschirme eine die Ausrichtung zueinander lösende Kraft ausgeübt, beispielsweise durch die Bildschirmreinigung oder eine Erschütterung des Arbeitsplatzes verlieren die Bildschirme ihre durch die Ausrichthilfe, in Figur 2 also durch die miteinander korrespondieren Klemmbauteile 30 aufgezwungene Anordnung allenfalls temporär. In der Regel werden sich die Bildschirme, eine entsprechende Beweglichkeit um ein nicht dargestelltes Gelenk vorausgesetzt, selbststätig zueinander ausrichten.

Selbst wenn eine selbststätige Ausrichtung zueinander nicht erfolgt, bedarf es lediglich eines geringen Nachstellaufwandes durch einen Benutzer, da die Ausrichthilfe, insbesondere die miteinander zusammenwirkenden Verbindungsmittel, in Figur 2 konkret die Magneten, die Bildschirmausrichtung selbststätig ausführen, sobald sie ausreichend nah aneinander herangeführt wurden.

Die in den Figuren 1 und 2 dargestellte und anhand der zugehörigen Beschreibung erläuterte Ausführungsform der Erfindung hat den Vorteil, dass sie über die separat vom Bildschirm handzuhabenden Klemmbauteile 30 der erfindungsgemäßen Ausrichthilfe nachrüstbar sind und - bei entsprechender Konstruktion - als variabel in ihrer Länge einstellbare Klemmbauteile 30 auch an Bildschirmen unterschiedlicher Abmessung festzulegen wären. Die Festlegung kann durch Klemmen erfolgen, ist jedoch erfindungsgemäß nicht darauf beschränkt. Genauso ist ein Aufkleben oder beispielsweise eine Befestigung über Klettelemente erfindungsgemäß für die nachzurüstende Ausrichthilfe denkbar.

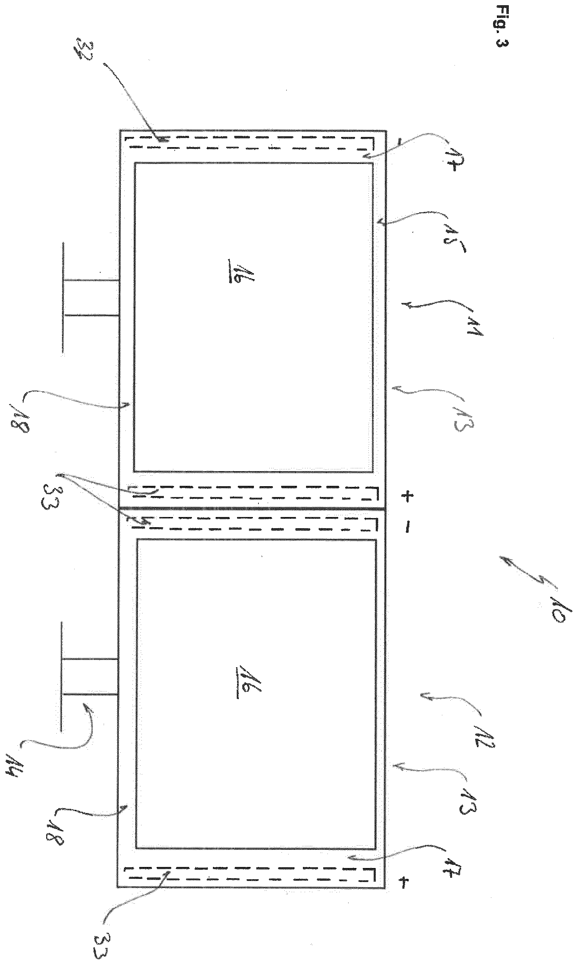

Figur 3 zeigt eine Bildschirmanordnung 10, die derjenigen in Figur 2 in allen wesentlichen Merkmalen ähnlich ist. Einzig und allein die erfindungsgemäße Ausrichthilfe ist hier in einer abweichenden Ausführungsform dargestellt. Die Verbindungsmittel erster Ausprägung (der mit "+"-Symbol markierte stabförmige Magnet 33) und das Verbindungsmittel zweiter Ausprägung (der mit "-"-Symbol versehende stabförmige Magnet 33) sind hier in den Bildschirmen 11 beziehungsweise 12, genauer in das Bildschirmgehäuse 13 hier jeweils in die vertikalen Rahmenschenkel 17, integriert. Die sind deswegen lediglich mit gestrichelten Linien dargestellt.

Der wesentliche Vorteil dieser Erfindung liegt in ihrem höheren ästhetischen Gesamteindruck. Die Funktion ist mit derjenigen des ersten Ausführungsbeispiels identisch. Auch hier richten sich die nebeneinander angeordneten Bildschirme 11 und 12 durch die Magnetkräfte zueinander aus, sobald die Bildschirme nahe genug aneinandergerückt sind.

Insgesamt umfassen die Verbindungsmittel bei den in den Figuren 1 bis 3 dargestellten Ausführungsformen jeweils stabförmige oder andere länglich ausgebildete Magnetformen.

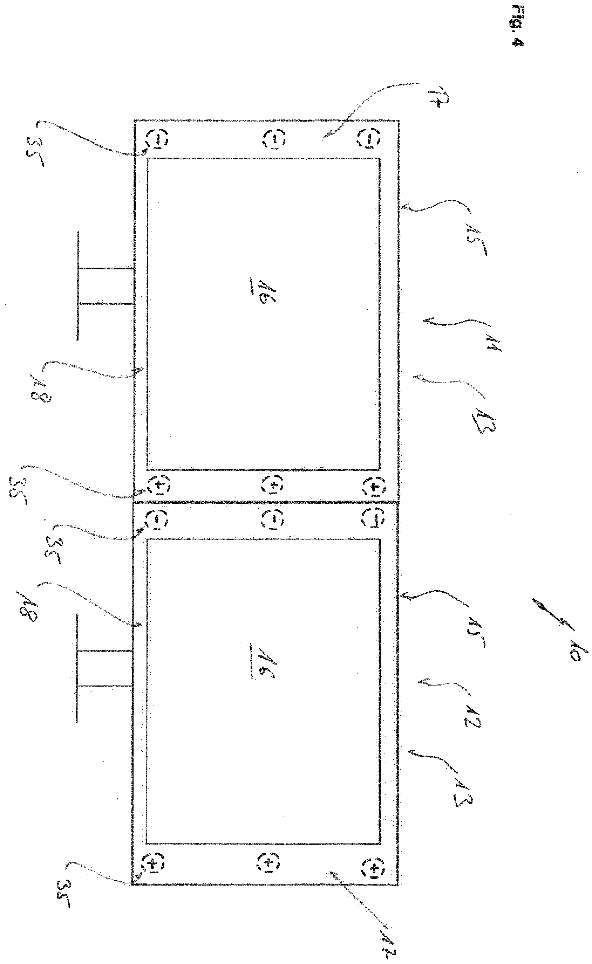

Figur 4 zeigt eine weitere Ausführungsform der Erfindung. Wiederum ist ein aus einem ersten Bildschirm 11 und einem zweiten Bildschirm 12 bestehende, insgesamt mit der Bezugsziffer 10 versehende Bildschirmanordnung gezeigt. Aufmerksamkeit verdient hier die abweichende Ausgestaltung der ersten und zweiten Verbindungsmittel. Hier sind in die jeweiligen vertikalen Rahmenschenkel 17 wiederum Magnete integriert. Hierbei handelt es sich jedoch um Einzelmagnete, die zueinander in vertikaler Richtung beabstandet angeordnet sind.

Die hier mit 35 bezeichneten Magnete sind wiederum hinsichtlich ihrer komplementären Polung mit "+" beziehungsweise "-" gekennzeichnet. Bei dieser Ausführungsform der Erfindung gibt es gegenüber den beiden vorgenannten Ausführungsformen einen Zusatznutzen. Die Anziehungskräfte wirken hier nicht nur in Horizontalrichtung unterstützend, um die Anordnung der Bildschirme zueinander zu gewährleisten. Durch die Nutzung mehrerer in Vertikalrichtung voneinander beabstandet angeordneter Magnete 35 findet auch eine in Vertikalrichtung wirkende Ausrichtfunktion statt. Insoweit liegen nicht nur zueinander benachbarte Vertikalschenkel 17 zweier Bildschirme 11, 12 exakt aneinander. Durch die vertikale Ausrichtunterstützung fluchten auch die horizontalen Rahmenschenkel 18 der beiden Bildschirme 11 und 12 miteinander.

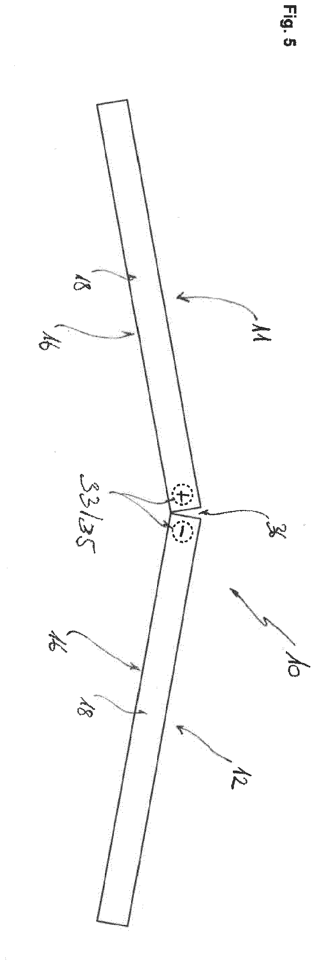

Figur 5 zeigt eine Aufsicht auf eine Bildschirmanordnung 10, wie sie beispielsweise in Figur 2, 3 oder 4 dargestellt ist. Diese Aufsicht zeigt, dass die Bildschirme in einem Winkel um eine gegenseitige Anlagelinie zwischen den vertikalen Rahmenschenkel 17 zueinander angeordnet sind, so dass zwischen den Vertikalschenkeln 17 der Bildschirmrahmen 15 ein Spalt besteht. Auch eine solche winklige Bildschirmanordnung hindert nicht die Vorzüge der erfindungsgemäßen Ausrichthilfe, insbesondere dann nicht, wenn die hier lediglich schematisch eingezeichneten Magnete 33/35 zum Betrachter weisend möglichst weit vorn in den Rahmen integriert sind.

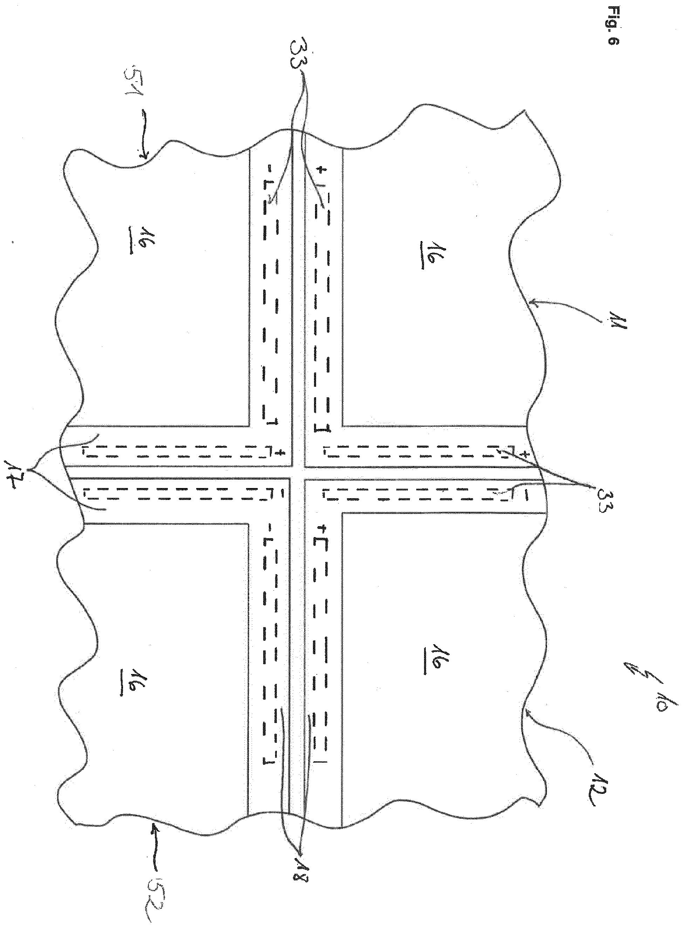

Figur 6 zeigt eine ausschnittsweise dargestellte Bildschirmanordnung 10, wie sie beispielsweise bei Großveranstaltungen Verwendung findet. Hier werden mehrere Bildschirme horizontal nebeneinander und vertikal übereinander zu einer einzigen, entsprechend großen Anzeigefläche zusammengeschaltet. Hier ist dargestellt, dass die Ausrichthilfe nicht nur im Bereich der Vertikalschenkel 17 sondern auch im Bereich der Horizontalschenkel 18 erste sowie zweite Verbindungsmittel in den Bildschirmrahmen angeordnet sind, die miteinander zusammen wirken, um hier vier teilweise dargestellte Bildschirme 11, 12, 51, 52 zueinander dauerhaft und stabil auszurichten.

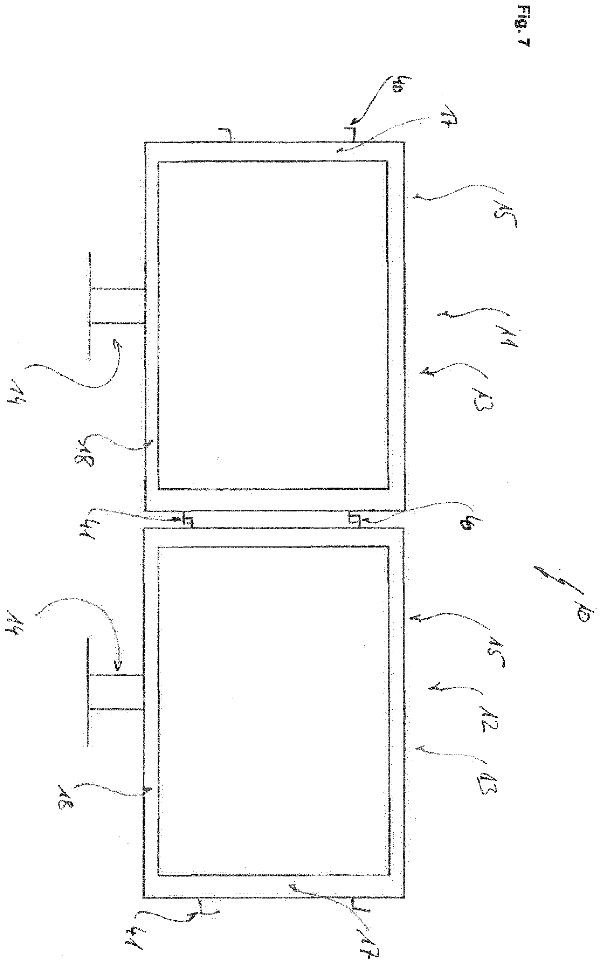

Schließlich sei auf Figur 7 verwiesen, die wiederum eine Anordnung 10 von nur zwei Bildschirmen 11 und 12 zeigt.

Auch hier tragen die Vertikalschenkel 17 der Bildschirme 11 und 12 erste Verbindungsmittel sowie zweite Verbindungsmittel, die miteinander eine Ausrichthilfe bilden können. Die ersten Verbindungsmittel sind hier als erste Haken 40 ausgebildet, die zweiten Verbindungsmittel sind als zweite Haken 41 ausgebildet. Die Haken benachbarter Vertikalschenkel 17 zweier Bildschirme 11, 12 greifen ineinander ein, um die Bildschirme Horizontal- wie Vertikalrichtung aneinander anzuordnen und sicher zueinander auszurichten. Die Haken 40 und 41 sind hier schematisch dargestellt. Zwischen den Bildschirmen 11 und 12 besteht ein Spalt, in welchem man das Eingreifen der Haken 40 und 41 erkennen kann. Es sei darauf hingewiesen, dass es sich hier um eine Überzeichnung handelt. Selbstverständlich kann auch hierbei ein nahtloses Aneinandersetzen der Bildschirme möglich sein, sodass eine verdeckte Anordnung der Haken gewährleistet ist. Um auch bei dieser Ausführungsform der Erfindung eine winklige Anordnung der Bildschirme 11 und 12 zueinander zu ermöglichen, wie sie bereits in Figur 5 dargestellt und beschrieben ist, ist es denkbar, die Haken federbelastet ausziehbar zu gestalten.

Figur 7 dient der Darstellung, dass die Ausrichthilfe durch formschlüssig ineinandergreifende, mechanische erste Verbindungsmittel und zweite Verbindungsmittel gebildet sein kann.

Als Alternative bildlich nicht dargestellte Ausführungsform ist es beispielsweise vorstellbar, das ein textiles Gewebe oder ein anderes Flächengebilde an zueinander weisenden Rahmenschenkel 17,18 benachbarter Bildschirme angeordnet sein kann, um diese miteinander zu verbinden. Dabei ist es durchaus denkbar, dass das Flächengebilde beziehungsweise textile Gewebe selbst Magnete oder magnetische Materialien enthält und hierüber reversible am Bildschirmrahmen 15 angeordnet sein kann.

Der wesentliche Vorteil der Erfindung, beschrieben in den vorgenannten Ausführungsbeispielen, besteht darin, dass die Ausrichthilfe eine Anordnung von wenigsten zwei oder mehr Bildschirmen zueinander stabilisieren beziehungsweise in gewissen Maße selbstständig bewirken kann. Hierdurch entsteht ein besonders vorteilhafter, ästhetischer Gesamteindruck beispielsweise an Arbeitsplätzen, darüber hinaus ist die Arbeitsplatzergonomie dauerhaft gewährleistet.

### Bezugszeichenliste

- 10: Anordnung von Bildschirmen
- 11: erster Bildschirm
- 12: zweiter Bildschirm
- 13: Bildschirmgehäuse
- 14: Bildschirmfuß
- 15: Bildschirmrahmen
- 16: Anzeigefläche
- 17: vertikaler Rahmenschenkel
- 18: horizontaler Rahmenschenkel
- 30: Klemmbauteil
- 31: Klemmgehäuse
- 32: Klemmschenkel
- 33: stabförmiger Magnet
- 35: Magnete
- 36: Spalt
- 40: erster Haken
- 41: zweiter Haken
- 51: dritter Bildschirm
- 52: vierter Bildschirm

## Patentansprüche

1. Ausrichthilfe für Bildschirme
- mit wenigstens einem ersten Verbindungsmittel (33, 35, 40) erster Ausprägung,
- mit wenigstens einem zweiten Verbindungsmittel (33, 35, 41) zweiter Ausprägung, wobei das erste Verbindungsmittel eines ersten Bildschirmes (11) und das zweite Verbindungsmittel eines zweiten Bildschirmes (12) zur Ausrichtung der Bildschirme (11, 12) zueinander miteinander kooperieren,
**dadurch gekennzeichnet, dass** die Bildschirme (11, 12) nachträglich mit der Ausrichthilfe versehbar sind, wobei durch das Zusammenwirken der ersten (33, 35, 40) und zweiten Verbindungsmittel untereinander die Außenkanten der Bildschirme (11, 12) sicher aneinander liegen.

2. Ausrichthilfe für Bildschirme nach Anspruch 1, **dadurch gekennzeichnet, dass** die Verbindungsmittel (33, 35) kontaktlos miteinander kooperieren.

3. Ausrichthilfe für Bildschirme nach Anspruch 2, **dadurch gekennzeichnet, dass** das erste Verbindungsmittel (33, 35) ein erster Magnet ist und das zweite Verbindungsmittel ein mit dem Magnet zusammenwirkendes magnetisches Material ist.

4. Ausrichthilfe für Bildschirme nach Anspruch 2 oder 3, **dadurch gekennzeichnet, dass** das erste Verbindungsmittel ein erster Magnet (33, 35) ist und auch das zweite Verbindungsmittel ein Magnet (33, 35) ist und, dass die Magnete (33, 35) am jeweiligen Bildschirm (11, 12) so angeordnet sind, dass Magnete mit ungleicher Polung einander zugewandt sind.

5. Ausrichthilfe nach Anspruch 1, **dadurch gekennzeichnet, dass** die Verbindungsmittel als mechanische Verbindungsmittel (40, 41) ausgebildet sind.

6. Ausrichthilfe nach Anspruch 5, **dadurch gekennzeichnet, dass** das erste Verbindungsmittel einen Fortsatz aufweist und das zweite Verbindungsmittel eine Ausnehmung aufweist, in welche der Fortsatz zur ausrichtenden Kopplung der Bildschirme eingreift.

7. Ausrichthilfe nach Anspruch 6, **dadurch gekennzeichnet, dass** das erste und das zweite Verbindungsmittel Rastmittel (40, 41) aufweisen, welche die Verbindungsmittel aneinander fixieren.

8. Ausrichthilfe nach einem der vorhergehenden Ansprüche, **dadurch gekennzeichnet, dass** die Verbindungsmittel als ergänzende Bauteile am jeweiligen Bildschirm anordenbar sind.

9. Ausrichthilfe nach Anspruch 8, **dadurch gekennzeichnet, dass** die Verbindungsmittel reib- und/oder formschlüssig am jeweiligen Bildschirm anordenbar sind.

10. Bildschirm mit einer Ausrichthilfe nach einem der Ansprüche 1 bis 7, **dadurch gekennzeichnet, dass** der Bildschirm (11) wenigstens ein erstes (33, 35, 40) und wenigstens ein zweites Verbindungsmittel (33, 35, 41) trägt, die für ein Zusammenwirken mit Verbindungsmitteln eines zweiten Bildschirmes (12) gleicher Art vorgesehen sind, wobei die Bildschirme (11, 12) nachträglich mit der Ausrichthilfe versehbar sind,
wobei durch das Zusammenwirken der ersten (33, 35, 40) und zweiten Verbindungsmittel untereinander die Außenkanten der Bildschirme (11, 12) sicher aneinander liegen.

11. Bildschirm nach Anspruch 10, **dadurch gekennzeichnet, dass** die Verbindungsmittel in den Bildschirm (11) integriert sind.

12. Bildschirm nach Anspruch 11 mit einer Ausrichthilfe nach einem der Ansprüche 2 bis 4, **dadurch gekennzeichnet, dass** jeweils das erste Verbindungsmittel (35) und das zweite Verbindungsmittel (35) stabförmig ausgebildet ist und parallel zu je einer Bildschirmkante in den Bildschirmrahmen (15) integriert ist.

13. Bildschirm nach einem der Ansprüche 10 bis 12, **dadurch gekennzeichnet, dass** das erste und das zweite Verbindungsmittel (33, 35, 40, 41) derart im Bildschirmrahmen (15) angeordnet ist, dass bei der Aneinanderreihung mehrere Bildschirme (11, 12, 51, 52) komplementäre Verbindungsmittel unterschiedlicher Bildschirme einander zugewandt sind.

## Claims

1. alignment aid for screens
- with at least one first connecting means (33, 35, 40) of a first type,
- with at least one second connecting means (33, 35, 41) of second embodiment, wherein the first connecting means of a first screen (11) and the second connecting means of a second screen (12) cooperate with each other for aligning the screens (11, 12) with each other,
**characterized in that**
the screens (11, 12) can be subsequently provided with the alignment aid,
the outer edges of the screens (11, 12) lying securely against one another as a result of the cooperation of the first (33, 35, 40) and second connecting means with one another.

2. alignment aid for screens according to claim 1, **characterized in that** the connecting means (33, 35) cooperate with each other in a contactless manner.

3. alignment aid for screens according to claim 2, **characterized in that** the first connecting means (33, 35) is a first magnet and the second connecting means is a magnetic material cooperating with the magnet.

4. alignment aid for screens according to claim 2 or 3, **characterized in that** the first connecting means is a first magnet (33, 35) and also the second connecting means is a magnet (33, 35) and, that the magnets (33, 35) are arranged at the respective screen (11, 12) such that magnets with unequal polarity face each other.

5. alignment aid according to claim 1, **characterized in that** the connecting means are designed as mechanical connecting means (40, 41).

6. alignment aid according to claim 5, **characterized in that** the first connecting means has an extension and the second connecting means has a recess in which the extension engages for aligning coupling of the screens.

7. alignment aid according to claim 6, **characterized in that** the first and the second connecting means have latching means (40, 41) which fix the connecting means to one another.

8. alignment aid according to one of the preceding claims, **characterized in that** the connecting means can be arranged as complementary components on the respective screen.

9. alignment aid according to claim 8, **characterized in that** the connecting means can be arranged on the respective screen in a frictional and/or positive-locking manner.

10. screen comprising an alignment aid according to one of claims 1 to 7, **characterized in that** the screen (11) carries at least one first (33, 35, 40) and at least one second connection means (33, 35, 41) intended to cooperate with connection means of a second screen (12) of the same type,
said screens (11, 12) being subsequently provided with said alignment aid,
the outer edges of the screens (11, 12) lying securely against one another as a result of the cooperation of the first (33, 35, 40) and second connecting means with one another.

11. screen according to claim 10, **characterized in that** the connecting means are integrated in the screen (11).

12. screen according to claim 11 with an alignment aid according to one of claims 2 to 4, **characterized in that** in each case the first connecting means (35) and the second connecting means (35) are designed in the form of a rod and are each integrated into the screen frame (15) parallel to one screen edge.

13. Screen according to one of claims 10 to 12, **characterized in that** the first and the second connecting means (33, 35, 40, 41) are arranged in the screen frame (15) in such a way that, when a plurality of screens (11, 12, 51, 52) are arranged side by side, complementary connecting means of different screens face one another.

## Revendications

1. aide à l'alignement pour écrans
- avec au moins un premier moyen de liaison (33, 35, 40) de première configuration,
- avec au moins un deuxième moyen de liaison (33, 35, 41) de deuxième configuration, le premier moyen de liaison d'un premier écran (11) et le deuxième moyen de liaison d'un deuxième écran (12) coopérant entre eux pour l'alignement des écrans (11, 12),
**caractérisé en ce que**
les écrans (11, 12) peuvent être pourvus ultérieurement de l'aide à l'alignement,
les bords extérieurs des écrans (11, 12) étant solidement placés l'un contre l'autre grâce à la coopération des premiers (33, 35, 40) et des seconds moyens de liaison.

2. Aide à l'alignement pour écrans selon la revendication 1, **caractérisée en ce que** les moyens de liaison (33, 35) coopèrent entre eux sans contact.

3. Aide à l'alignement pour écrans selon la revendication 2, **caractérisée en ce que** le premier moyen de liaison (33, 35) est un premier aimant et le deuxième moyen de liaison est un matériau magnétique coopérant avec l'aimant.

4. Aide à l'alignement pour écrans selon la revendication 2 ou 3, **caractérisée en ce que** le premier moyen de liaison est un premier aimant (33, 35) et le deuxième moyen de liaison est également un aimant (33, 35) et **en ce que** les aimants (33, 35) sont disposés sur l'écran respectif (11, 12) de telle sorte que les aimants de polarité différente se font face.

5. Aide à l'alignement selon la revendication 1, **caractérisée en ce que** les moyens de liaison sont des moyens de liaison mécaniques (40, 41).

6. Aide à l'alignement selon la revendication 5, **caractérisée en ce que** le premier moyen de liaison présente un prolongement et le deuxième moyen de liaison présente un évidement dans lequel le prolongement s'engage pour le couplage d'alignement des écrans.

7. Aide à l'alignement selon la revendication 6, **caractérisée en ce que** le premier et le deuxième moyen de liaison présentent des moyens d'encliquetage (40, 41) qui fixent les moyens de liaison l'un à l'autre.

8. Aide à l'alignement selon l'une des revendications précédentes, **caractérisée en ce que** les moyens de liaison peuvent être disposés sur l'écran respectif en tant que composants complémentaires.

9. Aide à l'alignement selon la revendication 8, **caractérisée en ce que** les moyens de liaison peuvent être disposés sur l'écran respectif par friction et/ou par complémentarité de formes.

10. écran avec une aide à l'alignement selon l'une des revendications 1 à 7, **caractérisé en ce que** l'écran (11) porte au moins un premier (33, 35, 40) et au moins un deuxième moyen de liaison (33, 35, 41) qui sont prévus pour coopérer avec des moyens de liaison d'un deuxième écran (12) de même type,
les écrans (11, 12) pouvant être équipés ultérieurement de l'aide à l'alignement,
la coopération des premiers (33, 35, 40) et des deuxièmes moyens de liaison entre eux permettant d'appliquer de manière sûre les bords extérieurs des écrans (11, 12) les uns contre les autres.

11. écran selon la revendication 10, **caractérisé en ce que** les moyens de liaison sont intégrés dans l'écran (11).

12. écran selon la revendication 11 avec une aide à l'alignement selon l'une des revendications 2 à 4, **caractérisé en ce que** le premier moyen de liaison (35) et le deuxième moyen de liaison (35) sont réalisés en forme de barre et sont intégrés dans le cadre de l'écran (15) parallèlement à un bord de l'écran.

13. Écran selon l'une des revendications 10 à 12, **caractérisé en ce que** le premier et le deuxième moyen de liaison (33, 35, 40, 41) sont disposés dans le cadre d'écran (15) de telle sorte que, lors de la juxtaposition de plusieurs écrans (11, 12, 51, 52), des moyens de liaison complémentaires de différents écrans sont tournés les uns vers les autres.
